# EUROPEAN PATENT APPLICATION

(11) **EP 4 545 407 A1**
(43) Date of publication of application: **30.04.2025**
(21) Application number: 23205185.4
(22) Date of filing: 23.10.2023
(51) Int. Cl.: B64D 11/00

(54) **HOLDING DEVICE FOR A MOVABLE CABIN CLASS DIVIDER**

(71) Applicant: Airbus Operations GmbH, 21129 Hamburg (DE)
(72) Inventor: Moje, Sabrina, 21129 Hamburg (DE); Udayashankar, Vinay, 21129 Hamburg (DE)

(57) **Abstract**

Holding device (10) for a movable cabin class divider comprising: an upper part (12), and a lower part (22); wherein the upper part (12) is an inboard attachment configured to be connected to an overhead bin structure; wherein the lower part (22) is an inboard fitting configured to be connected to the movable class divider; wherein the inboard attachment comprises a block part (14) and a connection protrusion (16) with a first bore (18), and the inboard fitting comprises a cutout (28) with a second bore (24), the cutout (28) being defined by two lateral faces (13) and one middle face; wherein the cutout (28) is configured to receive the connection protrusion (16) such that the first bore (18) and the second bore (24) are aligned to form a secured position, and wherein a locking element (20) is provided configured to releasably fix the inboard fitting to the inboard attachment in the secured position by extending through the first bore (18) and the second bore (24).

## Description

### Field of the invention

The invention generally relates to class divider attachments. In particular, the invention relates to a holding device for a movable cabin class divider, to a movable class divider arrangement, a cabin structure, an aircraft and a method for attaching a movable cabin class divider in an aircraft cabin.

### Technical Background

Cabin class dividers help separate passenger zones in an aircraft cabin between for example a first, a business, and an economy class. Cabin class dividers may be curtains or can be in a solid form, such as for example panels or barriers made of e.g. thermoplastic material, or they can be made of a combination thereof. It is possible to move such cabin class dividers after every flight to a new position, for example if the number of passengers in one class has increased or decreased and more seats or less seats are needed in one class. The installation and removal is normally done by a trained person such as a member of the cabin crew because the installation is not easy and requires practice. A solid cabin class divider for example usually has to be fitted with the inboard fitting into the inboard attachment assembly first, held in that position and afterwards be pushed upwards in a rotary movement in order to mount a passenger service unit (PSU) fitting into a PSU attachment assembly.

Exact alignment is thereby critical to ensure that the class divider can be securely locked into position within the PSU and will not fall down during crash or turbulence. The cabin class divider must also be firmly attached in the corridor area to withstand, for example, handloads.

In order to increase the security with regard to a firm locking, easier-to-operate attachment systems are desirable.

Therefore, a new holding device is proposed which makes the mounting of an aircraft cabin class divider easier and the arrangement safer.

### Summary of the invention

It may be seen as an object of the invention to provide an alternative and improved device for attaching movable cabin class dividers, for example in an aircraft cabin.

Provided is a holding device, a movable class divider arrangement, a cabin structure, an aircraft and a method for attaching a movable cabin class divider. Further embodiments of the invention are evident from the dependent claims and from the following description.

According to an aspect of the invention, a holding device for a movable cabin class divider is provided. The holding device comprises an upper part and a lower part, wherein the upper part is an inboard attachment configured to be connected to an overhead bin structure; and the lower part is an inboard fitting configured to be connected to the movable class divider. The inboard attachment comprises a block part and a connection protrusion with a first bore, and the inboard fitting comprises a cutout with a second bore. The cutout is defined by two lateral faces and one middle face and is configured to receive the connection protrusion such that the first bore and the second bore are aligned to form a secured position. Further, a locking element is provided configured to releasably fix the inboard fitting to the inboard attachment in the secured position by extending through the first bore and the second bore.

Thus, the holding device comprises two decoupled parts, one inboard attachment configured to be connected to an area of an overhead bin structure of the cabin and one inboard fitting configured to be connected to a body of the movable class divider.

The holding device may be seen as an approach to provide an improved attachment for a cabin class divider. The attachment as a whole is simplified in that the (usually two) attachments - a main mounting within the PSU and an attachment at the edge of the movable class divider - are separated. That is, apart from the main mounting within the PSU, the cabin class divider can be fixed separately, i.e. in a decoupled step, at an edge of the movable cabin class divider by means of the inventive holding device. As a major advantage, the movement can be straight upwards instead of rotary, and the installer has only to concentrate on one attachment than on two at the same time. The cabin class divider is pushed from the bottom to top in a simple movement without rotation.

After having mounted the movable cabin class divider to a support structure in the passenger service unit (PSU) the movable class divider (MCD) can be easily further secured by means of the holding device according to the invention such that the MCD sits tight and straight and is also fixed in the area of the corridor.

A movable cabin class divider herein may preferably relate to a solid movable cabin class divider. The movable cabin class divider may have a plate- or panel-shaped body and can be mounted between two seat rows transversely to the longitudinal axis of, for example an aircraft cabin. "Movable" means that the class divider can be mounted and dismounted repeatedly. That is, the movable cabin class divider is not permanently fixed in one position.

The upper part is also referred to as "inboard attachment" and the lower part is also referred to as "inboard fitting".

An overhead bin structure refers to any structure of a bin that is arranged overhead a seat row, as is commonly seen, for example, in aircraft cabins. A bin may have any shape and form suitable for the intended use and for example, also may be referred to as a box. The overhead bin structure may also relate to a plurality of bins, for example arranged in series, wherein the bin(s) are usually configured to receive and store luggage.

The inboard attachment is configured to be connected to an overhead bin structure and comprises a block part and a connection protrusion with a first bore. In an example, the inboard attachment is configured to be permanently fixedly connected to an overhead bin structure and the connection can be achieved by gluing, screwing, pinching or clamping or any other method which results in a permanent fixation of the inboard attachment to the overhead bin structure.

This is particularly advantageous in that several positions of movable class dividers can be predefined and the inboard attachment can stay in place also when not in use.

In an example, the block part of the inboard attachment can be configured to fit for example inside the fingertip rail of an overhead bin or can be configured to clamp the rail in between in order to be permanently fixedly connected therewith.

The block part may also be referred to as a "sliding block" because it can slide, for example in the fingertip rail before it may be fixed therein for a permanent connection. Preferably, the inboard attachment is permanently fixedly connected to the fingertip rail via its block part, and the connection protrusion can protrude from the rail to which the attachment is fixed.

The connection protrusion may be manufactured separately and for example screwed together with the block part. Block part and connection protrusion can however also be made in one piece.

The connection protrusion comprises a first bore and can also be referred to as a "ring part". The bore is also referred to as a hole. The bore or hole can be cylindrical or can have another form and may, for example, appear triangular or rectangular in crosssection.

The inboard fitting is configured to be connected to the movable class divider. In an example, the inboard fitting is configured to be permanently fixedly connected to the movable class divider. Again, this can be achieved through several techniques such as screwing or gluing or any fusion technology such as welding. As an option, the inboard fitting and the movable class divider are made in one piece such that the inboard fitting forms part of the movable class divider.

The inboard fitting comprises a cutout in the middle with a second bore. The cutout is defined by two lateral faces and one middle face and is configured to receive the connection protrusion such that the first bore and the second bore are aligned to form a secured position.

The upper part and the lower part of the holding device can be in a decoupled state.

"Decoupled" can also be referred to as "separated". That is, in an unsecured state, the upper part is in a different position from the lower part. For example, the upper part is mounted to or permanently fixedly connected with an overhead bin structure, whereas the lower part is mounted to or permanently fixedly connected with a movable class divider. Consequently, when the movable class divider is dismounted, the upper and the lower part are in a decoupled or separated state.

The term "secured" or "secured position" may relate to a state where both parts, the upper part and the lower part of the holding device are joined together and the bores are aligned. "Secured position" may also be referred to as "secured state" or "mounted state".

Furthermore, a locking element is provided. The locking element can be a pin, a rod, a bold or a stud, or can have any other shape and relates to anything that is suitable to be pushed into a hole or tube. The first bore of the connection protrusion and the second bore of the inboard fitting are aligned in a secured state such that the locking element can releasably fix the inboard fitting to the inboard attachment by extending through the first bore and the second bore.

The locking element may have a smaller diameter than the first bore of the inboard attachment and thus, may be contactless to the bore of the inboard attachment.

According to an embodiment, the connection protrusion and at least one of the two lateral faces and the middle face are contactless to each other in the secured position.

The avoidance of physical contact between parts of the holding device has the advantageous effect that there is no rattling and it allows for a play in either direction. In the event of hand load, turbulence or crash however, the parts get in touch and ensure the cabin class divider to stay in the defined position.

According to an embodiment, the connection protrusion and the two lateral faces are contactless to each other in the secured position.

If the connection protrusion and the two lateral faces are contactless to each other in the secured position, it follows that the connection protrusion may have a play in the direction of the pin insertion.

According to an embodiment, the connection protrusion and the middle face are contactless to each other in the secured position.

It follows from this example that the connection protrusion may have a play in the direction perpendicular to the pin insertion movement.

According to an embodiment, the inboard attachment is configured to be permanently fixedly connected to a fingertip rail of the overhead bin structure.

In an example, the inboard attachment is permanently fixed to a fingertip rail of an overhead bin structure. Fingertip rails can be arranged at least along a part of an inboard edge of one or more overhead bins. A fingertip rail is an elongated recess or continuous groove usually located underneath the flap of an overhead bin and may serve several purposes: it is an easy-to-find catch to open the flap and can, in closed condition, also serve as a guide rail along which one can walk if, for example, there is smoke in the cabin in an emergency or after crash.

It is advantageous to connect the inboard attachment with a fingertip rail of the overhead structure simply because the fingertip rail is usually already there and no further device needs to be installed. Furthermore, the fingertip rail (for example in an airplane cabin) is a stable part of the overhead structure as the overhead bins typically are configured to store luggage, i.e. the rail can bear or withstand high loads.

According to an embodiment, the locking element of the holding device is a connection pin which is spring-loaded.

In an example, the connection pin provided with the inboard fitting is spring loaded, i.e. a closing force or spring force is applied by, for example, a spiral spring. The latter has the advantageous effect that the device may be "automatically" secured when the bores are aligned. In an open position the pin stays connected with the inboard fitting and cannot get lost.

According to an embodiment, the upper part is the inboard fitting configured to be permanently fixedly connected to an overhead bin structure, and the lower part is the inboard attachment configured to be permanently fixedly connected to the movable class divider.

In an example, it is also possible to attach the inboard fitting and the inboard attachment vice versa, i.e. the movable class divider bears the inboard attachment and the overhead bin structure bears the inboard fitting. In a dismounted stage of the cabin class divider, the inboard attachment and the inboard fitting are decoupled.

Also in this example, the movable cabin class divider and the inboard attachment and/ or the overhead bin structure and the inboard fitting, respectively, may be made in one piece.

According to an aspect of the invention, a movable class divider arrangement is provided comprising a movable class divider segment, a holding device as previously defined, and a mounting device. The movable class divider segment is panel-shaped and comprises an upper edge. The inboard fitting of the holding device is arranged at an end portion of the upper edge and the mounting device is arranged at the upper edge and is configured to mount the segment to a support structure in a passenger service unit.

A movable class divider, also referred to as a movable cabin class divider, may be an integrally formed oblong panel, however it may also comprise further non-solid elements such as a curtain; in addition, the movable class divider can comprise other segments, for example segments consisting of a different material (such as, for example a transparent material). According to the present invention the movable class divider segment refers to a segment made of solid material.

The movable class divider segment comprises an edge which surrounds the movable class divider. The edge, which may also be referred to as a frame, may define the area that connects the two parallel surfaces of the front and the back of the panel.

The edge can be divided into upper, lateral and lower edge, respectively.

The upper edge of the movable class divider comprises two end portions at the right and left of the upper edge.

The movable class divider arrangement further comprises a mounting device which is arranged at the upper edge of the movable class divider segment. The mounting device is configured to mount the segment to a support structure, for example in a passenger service unit (PSU) above a seat row.

The firm, force-fit attachment of the movable class divider is thus accomplished by the mounting device which is fitted into a reception within the passenger service unit. The holding device only "firmly holds" in case it is needed, i.e. in case of hand-load or turbulence, such that the movable class divider will stay in the defined position.

According to aspect of invention a cabin structure is provided comprising an overhead bin arrangement with a plurality of bins, at least one movable class divider arrangement as previously defined, and at least two upper parts of a holding device as explained above. A fingertip rail is arranged at least along a part of an inboard edge of the plurality of bins, and at least two upper parts are mounted to the fingertip rail of the inboard edge of the plurality of bins. In an example, the at least two upper parts are permanently fixedly connected to the fingertip rail of the inboard edge of the plurality of bins.

According to a further aspect of the invention, an aircraft is provided comprising a fuselage enclosing a cabin area, wherein the cabin area comprises at least partly a cabin structure as defined above.

The fuselage is the main body of an aircraft and usually holds crew, passengers and cargo. It encloses a cabin area wherein the seats for the passengers are arranged according to a certain design and can be divided into individual areas, such as different classes.

According to another aspect of the invention, a method for attaching a movable class divider in an aircraft is provided, comprising the steps of a) moving the movable class divider vertically upwards in z-direction, b) mounting the movable class divider with a mounting device provided at an upper edge of the movable class divider to a support structure in a passenger service unit, and c) fitting an inboard fitting arranged at an end portion of the upper edge of the movable cabin class divider in an inboard attachment provided on an overhead bin structure, wherein steps b) and c) are decoupled from each other.

As explained above, the holding device comprises two decoupled parts, one inboard attachment configured to be connected to an area of an overhead bin structure of the cabin and one inboard fitting configured to be connected to the body of a movable class divider. In an example, the inboard attachment is configured to be permanently fixedly connected to an area of an overhead bin structure of the cabin and the inboard fitting is configured to be permanently fixedly connected to the body of a movable class divider. As a further option, the inboard attachment can also be configured to be connected or permanently fixedly connected to the body of a movable class divider, and the inboard fitting can be configured to be connected or permanently fixedly connected to an area of an overhead bin structure of the cabin (thus, upper and lower part of the holding device are fixed vice versa).

The advantageous effect of the method is that the attachment as a whole is simplified in that the (usually two) attachments of the movable class divider are separated. Apart from the main mounting within the passenger service unit (PSU), the cabin class divider is fixed separately, i.e. in a decoupled step c), at an edge of the movable cabin class divider by means of the inventive holding device.

### Brief description of the drawings

The present invention will hereinafter be described in conjunction with the following drawing figures, wherein like numerals denote like elements, and wherein:
- Fig. 1: schematically shows the holding device for a movable cabin class divider.
- Fig. 2: schematically shows the upper part of the holding device.
- Fig. 3: schematically shows the lower part of the holding device.
- Fig. 4a: schematically shows a lateral cross view of an example of the holding device.
- Fig. 4b: schematically shows a sidelong plan view of an example of the holding device.
- Fig. 5: schematically shows a cross-sectional area of an example of the holding device.
- Fig. 6: schematically shows a side view an example of a movable class divider arrangement.

### Detailed description of exemplary embodiments

The representations and illustrations in the drawings are schematic and not to scale. A better understanding of the device, the arrangement, the cabin structure and the method described above may be obtained through a review of the illustrations accompanying this application together with a review of the detailed description that follows.

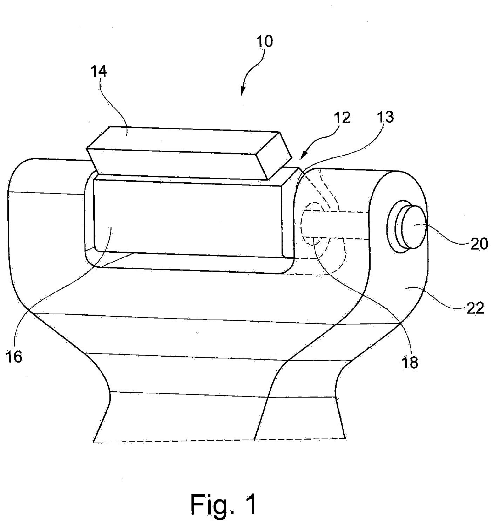

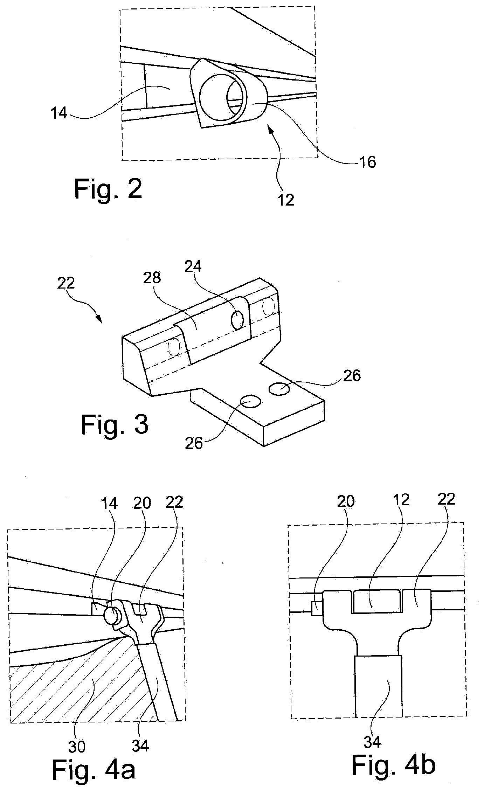

Fig. 1 schematically shows the holding device 10 for a movable cabin class divider, wherein the upper part 12 and the lower part 22 are joined together and the whole mechanism is shown in a locked position. The connection protrusion 16 of the upper part 12 is received by the cutout (28, shown in Fig. 3) of the lower part 22 (inboard fitting) and the first bore 18 and the second bore (24, shown in Fig. 3) are aligned to form a secured position. The block part 14 and the connection protrusion 16 are manufactured separately and are screwed together. In an example (not shown), the block part 14 and the connection protrusion 16 of the upper part 12 (inboard attachment) are made in one piece. A locking element 20 is provided fixing the inboard fitting 22 to the inboard attachment 12 in the secured position by extending through the first bore 18 and the second bore 24. In an example, the locking element 20 is a connection pin which is spring loaded and has a locking mechanism. The connection protrusion 16 and the two lateral faces 13 of the cutout are contactless to each other and thus, the connection protrusion has a play in the direction of the pin insertion. In an example, the middle face of the cutout 28 and the connection protrusion 16 are contactless to each other such that the connection protrusion 16 has a play in the direction perpendicular to the pin insertion movement.

Fig. 2 schematically shows the upper part 12 of the holding device 10 which is permanently fixedly connected to a fingertip rail of an overhead bin structure in an aircraft cabin. The inboard attachment 12 comprises the block part 14 and the connection protrusion 16 which are screwed together. The inboard attachment 12 is permanently fixedly connected via the block part 14, whereas the connection protrusion 16 of the inboard attachment protrudes from the fingertip rail. Here, the upper part 12 and the lower part 22 are decoupled from each other.

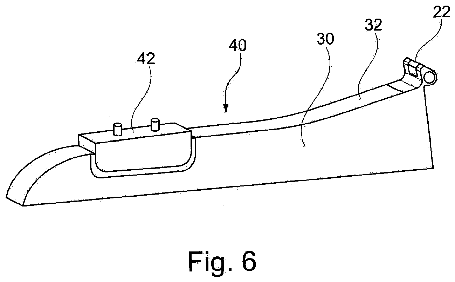

Fig. 3 schematically shows the lower part 22 of the holding device 10. Mounting holes 26 are used to attach the inboard fitting to a movable class divider segment 30. In an example (as shown in Fig. 6) the inboard fitting 22 forms part of the movable class divider segment 30, i.e. the movable class divider segment 30 and the inboard fitting 22 are made in one piece and consequently, no mounting holes 26 are required. As in Fig. 2 above, the lower part 22 and the upper part 12 are decoupled from each other.

Fig. 4a schematically shows a lateral cross view of an example of a movable class divider arrangement. The movable class divider is panel-shaped and is mounted to a support structure in a passenger service unit (not shown). The movable class divider segment 30 has an edge 34, an inboard fitting 22 fixedly connected thereto and arranged at an end portion of the upper edge 32 of the movable class divider. In this example, the inboard fitting is joined with the inboard attachment which is permanently fixedly connected to an overhead bin structure and the inboard fitting is releasably fixed to the inboard attachment by a locking element 20 in a secured position. The upper 12 and the lower part 22 of the holding device are in a coupled state.

Fig. 4b schematically shows a sidelong plan view of an example of the movable class divider arrangement. The inboard fitting is permanently fixedly connected to an end portion of the upper edge 32 of the movable class divider and is joined with the inboard attachment which is permanently fixedly connected to an overhead bin structure. The inboard fitting is releasingly connected to the inboard attachment by a locking element 20. The upper 12 and the lower part 22 of the holding device are in a coupled state.

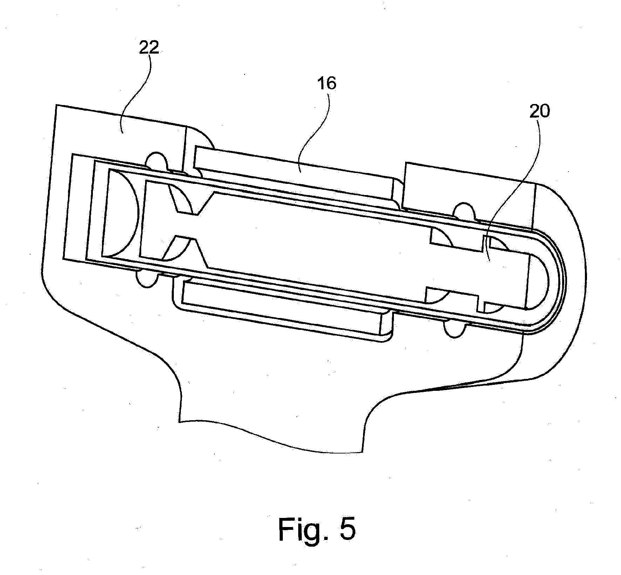

Fig. 5 schematically shows a cross-sectional view of an example of the holding device. The connection protrusion 16 of the inboard attachment is received by the cutout of the inboard fitting. The locking element 20 is a pin which is in a closed position and is completely inside the fitting and thus, secured against unwanted usage or movement. The connection pin has a smaller diameter than the connection protrusion 16 of the inboard attachment such that there is a play between the pin and the inboard attachment. In an example, the pin contacts the inboard fitting 22 in order to ensure a tight fit and to avoid rattling.

Fig. 6 shows an example of a movable class divider arrangement 40. A panel-shaped movable class divider segment 30 is equipped with a mounting device 42 and comprises an upper edge 32 and an inboard fitting 22 arranged at an end portion of the upper edge 32. In an example, the inboard fitting 22 and the movable class divider are made in one piece such that the inboard fitting 22 is part of the movable class divider segment 30.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. Any reference signs in the claims should not be construed as limiting the scope.

### Reference signs

- 10: holding device
- 12: upper part / inboard attachment
- 13: lateral face
- 14: block part
- 16: connection protrusion
- 18: first bore
- 20: locking element
- 22: lower part / inboard fitting
- 24: second bore
- 26: attachment hole
- 28: cutout
- 30: movable class divider segment
- 32: upper edge
- 34: edge
- 40: movable class divider arrangement

## Claims

1. Holding device (10) for a movable cabin class divider comprising:
- an upper part (12), and
- a lower part (22);
wherein the upper part (12) is an inboard attachment configured to be connected to an overhead bin structure;
wherein the lower part (22) is an inboard fitting configured to be connected to the movable class divider;
wherein the inboard attachment comprises a block part (14) and a connection protrusion (16) with a first bore (18), and the inboard fitting comprises a cutout (28) with a second bore (24), the cutout being defined by two lateral faces (13) and one middle face;
wherein the cutout (28) is configured to receive the connection protrusion (16) such that the first bore (18) and the second bore (24) are aligned to form a secured position, and
wherein a locking element (20) is provided configured to releasably fix the inboard fitting to the inboard attachment in the secured position by extending through the first bore (18) and the second bore (24).

2. Holding device according to claim 1, wherein the connection protrusion (16) and at least one of the two lateral faces (13) and the middle face are contactless to each other in the secured position.

3. Holding device according to claim 2, wherein the connection protrusion (16) and the two lateral faces (13) are contactless to each other in the secured position.

4. Holding device according to claim 2, wherein the connection protrusion (16) and the middle face are contactless to each other in the secured position.

5. Holding device according to one of the preceding claims, wherein the inboard attachment is configured to be permanently fixedly connected to a fingertip rail of the overhead bin structure.

6. Holding device according to one of the preceding claims, wherein the locking element (20) is a connection pin which is spring-loaded.

7. Holding device according to one of the preceding claims, wherein the upper part (12) is the inboard fitting configured to be permanently fixedly connected to an overhead bin structure, and wherein the lower part (22) is the inboard attachment configured to be permanently fixedly connected to the movable class divider.

8. A movable class divider arrangement (40) comprising:
- a movable class divider segment (30);
- a holding device (10) according to one of the preceding claims; and
- a mounting device (42);
wherein the movable class divider segment (30) is panel-shaped and comprises an upper edge (32);
wherein the inboard fitting of the holding device (10) is arranged at an end portion of the upper edge (32);
wherein the mounting device (42) is arranged at the upper edge (32) and is configured to mount the segment to a support structure in a passenger service unit.

9. A cabin structure comprising:
- an overhead bin arrangement with a plurality of bins,
- at least one movable class divider arrangement (40) according to claim 8, and
- at least two upper parts (12) according to claim 1,
wherein a fingertip rail is arranged at least along a part of an inboard edge of the plurality of bins; and
wherein the at least two upper parts (12) are mounted to the fingertip rail of the inboard edge of the plurality of bins.

10. An aircraft comprising:
a fuselage enclosing a cabin area,
wherein the cabin area comprises at least partly a cabin structure according to claim 9.

11. A method for attaching a movable class divider in an aircraft, comprising the following steps:
a) moving the movable class divider vertically upwards in z-direction,
b) mounting the movable class divider with a mounting device (42) provided at an upper edge (32) of the movable class divider to a support structure in a passenger service unit,
c) fitting an inboard fitting arranged at an end portion of the upper edge (32) of the movable cabin class divider in an inboard attachment provided on an overhead bin structure;
wherein steps b) and c) are decoupled from each other.
